# EUROPÄISCHE PATENTSCHRIFT

(11) **EP 0 895 813 B1**
(45) Veröffentlichungstag und Bekanntmachung des Hinweises auf die Patenterteilung: **30.06.2004**
(21) Anmeldenummer: 98114306.8
(22) Anmeldetag: 30.07.1998
(51) Int. Cl.: B01L 7/00, G01N 35/10

(54) **Pipettierroboter mit Temperiervorrichtung**
Pipetting robot with thermostatic device
Robot de pipettage avec dispositif thermostatique

(30) Priorität: 08.08.1997 DE 29714206 U; 15.04.1998 DE 19816424
(43) Veröffentlichungstag der Anmeldung: 10.02.1999
(73) Patentinhaber: Aventis Pharma Deutschland GmbH, 65929 Frankfurt am Main (DE)
(72) Erfinder: Hartz, Detlef, 60385 Frankfurt (DE)

(56) Entgegenhaltungen:
- EP-A- 0 339 710
- EP-A- 0 500 506
- DE-A- 4 003 604
- US-A- 5 055 408

## Beschreibung

Die Erfindung betrifft eine plattenförmige Temperiervorrichtung für Pipettierroboter zur Aufnahme von Mikrotiterplatten.

Temperiervorrichtungen für Pipettierroboter sind bekannt, beispielsweise von der Firma Beckmann Instruments GmbH, Frankfurter Ring 116, D-80810 München, die die Pipettierroboter unter dem Namen BIOMEK 2000 vertreibt. Auf diese Pipettierroboter wird in der vorliegenden Anmeldung ausdrücklich Bezug genommen. Solche Roboter werden in der pharmazeutischen Industrie beispielsweise zum Austesten von unbekannten Substanzen (Screening Tests) eingesetzt. Sie umfassen Temperiervorrichtungen für Behältnisse für die unbekannten Substanzen, die auf sogenannten Mikrotiterplatten angeordnet sind, sowie über Programmiersprachen bzw. Programmcodes ansteuerbare Pipettiervorrichtungen zum Befüllen dieser Behältnisse. Mit den Temperiervorrichtungen werden die unbekannten Substanzen bei den Screening Tests während des Pipettiervorganges auf konstanter Temperatur gehalten. Die bekannten Temperiervorrichtungen sind mittels Peltierelementen temperierbar, d.h. beheiz- oder kühlbar und weisen zwei Segmente zur Aufnahme von Mikrotiterplatten auf. Die bekannte Temperiervorrichtung hat die Nachteile, daß sie nur für Mikrotiterplatten eines bestimmten Formats geeignet ist und daß sie die zur Verfügung stehende Arbeitsfläche des Pipettierroboters, das ist die Fläche, die von der Pipettiervorrichtung erreichbar ist, nicht vollständig ausnutzt.

Aus DE 4003604 A1 ist bereits eine Vorrichtung bekannt, die mittels einer Heiz-Kühlschlange Mikrotiterplatten temperiert, wobei die Heiz-Kühlschlange durch einen Rost von den Mikrotiterplatten getrennt ist, und der Rost eine dem raschen Temperaturausgleich dienende Luftzirkulation ermöglicht.

Gegenstand der Erfindung ist daher eine plattenförmige Temperiervorrichtung für Pipettierroboter zur Aufnahme von Mikrotiterplatten, dadurch gekennzeichnet, daß die Temperiervorrichtung eine Rohrschlange für ein Temperiermedium aufweist und in mindestens zwei Segmente, bevorzugt drei Segmente, zur Aufnahme der Mikrotiterplatten unterteilt ist, wobei die Temperiervorrichtung ein Oberteil und ein Unterteil aufweist, die beide als rechteckige Platten ausgebildet sind, die aufeinandergelegt die Temperiervorrichtung bilden, und in das Oberteil in die Seite, die dem Unterteil gegenüberliegt, Nuten so eingearbeitet sind, daß diese Seite in drei Segmente zur Aufnahme von Mikrotiterplatten unterteilt ist.
Eine bevorzugte Ausgestaltung ist eine Temperiervorrichtung, aufweisend ein Oberteil und einem Unterteil, die beide als rechteckige Platten ausgebildet sind, die aufeinandergelegt die Temperiervorrichtung bilden, wobei die Oberfläche des Unterteils, die mit dem Oberteil in Kontakt ist, eine Rinne aufweist ist, die im zusammengebauten Zustand wie eine Rohrschlange wirkt.
Oberteil und Unterteil können beispielsweise mit Schrauben oder anderen geläufigen Befestigungsmitteln miteinander verbunden sein.

Gegenstand der Erfindung ist auch ein Pipettierroboter, aufweisend eine erfindungsgemäße Temperiervorrichtung.

Die bekannten programmierbaren Pipettierroboter können jedoch die erfindungsgemäße Temperiervorrichtung aufgrund ihrer Programmierung nicht vollständig nutzen, d.h. bedienen, so daß nicht alle Behältnisse von der Pipettiervorrichtung befüllt werden können.

Der Erfindung lag daher zusätzlich die Aufgabe zugrunde, diesem Nachteil abzuhelfen.

Gegenstand der Erfindung ist daher weiter ein programmierbarer Pipettierroboter, aufweisend eine erfindungsgemäße Temperiervorrichtung zur Aufnahme von Mikrotiterplatten, die Behältnisse für Flüssigkeiten aufweisen, sowie eine über eine Programmiersprache ansteuerbare Pipettiervorrichtung, wobei der Pipettierroboter so programmiert ist, daß, wenn die Temperiervorrichtung und die Mikrotiterplatten bestimmungsgemäß angeordnet sind, mit der Pipettiervorrichtung in jedes der Behältnisse eine Flüssigkeit gefüllt werden kann.

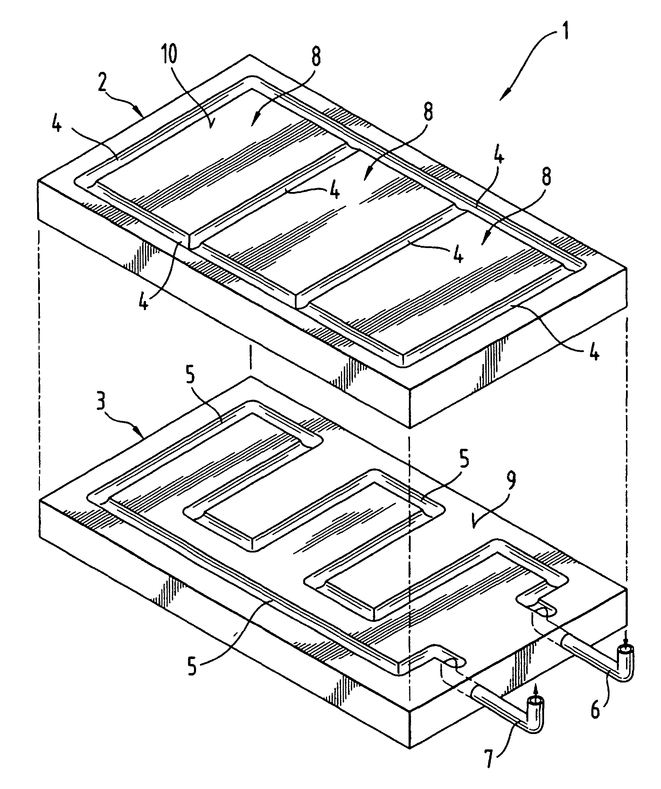

Im folgenden wird eine bevorzugte Ausgestaltung der erfindungsgemäßen Temperiervorrichtung anhand der Figur näher erläutert. Eine Beschränkung der Erfindung in irgendeiner Weise ist dadurch nicht beabsichtigt.

Die bevorzugte Ausführungsform ist in der Figur perspektivisch dargestellt. Sie ist dadurch gekennzeichnet, daß die Temperiervorrichtung 1 aus einem Oberteil 2 und einem Unterteil 3 besteht, die beide als rechteckige Platten ausgebildet sind, die aufeinandergelegt die Temperiervorrichtung 1 bilden, wobei in die Oberfläche 9 des Unterteils 3, die mit dem Oberteil 2 in Kontakt ist, eine Rinne 5 eingearbeitet ist, die im zusammengebauten Zustand wie eine Rohrschlange wirkt. Die Rohrschlange 5 hat einen Eingang 6 und einen Ausgang 7 für eine Heiz- oder Kühlmedium, je nach Anwendung. In das Oberteil 2 sind in die Seite 10, die dem Unterteil 3 gegenüberliegt, Nuten 4 so eingearbeitet sind, daß diese Seite 10 in drei Segmente 8 zur Aufnahme von Mikrotiterplatten unterteilt ist. Eine weitere Unterteilung in zwei oder mehr als drei Segmente 8 ist ohne weiteres möglich.

Im folgenden wird ein beispielhaftes Programm zum erfindungsgemäßen Ansteuern eines Pipettierroboters vorgestellt. Es wurde in der Programmiersprache TCL geschrieben, die von der Fa. Beckmann für derartige Anwendungen vorgeschlagen wird und über das Internet zugänglich ist.

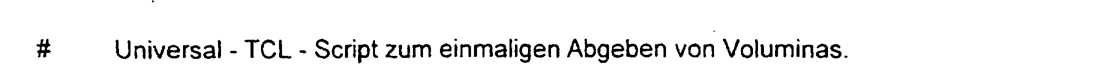

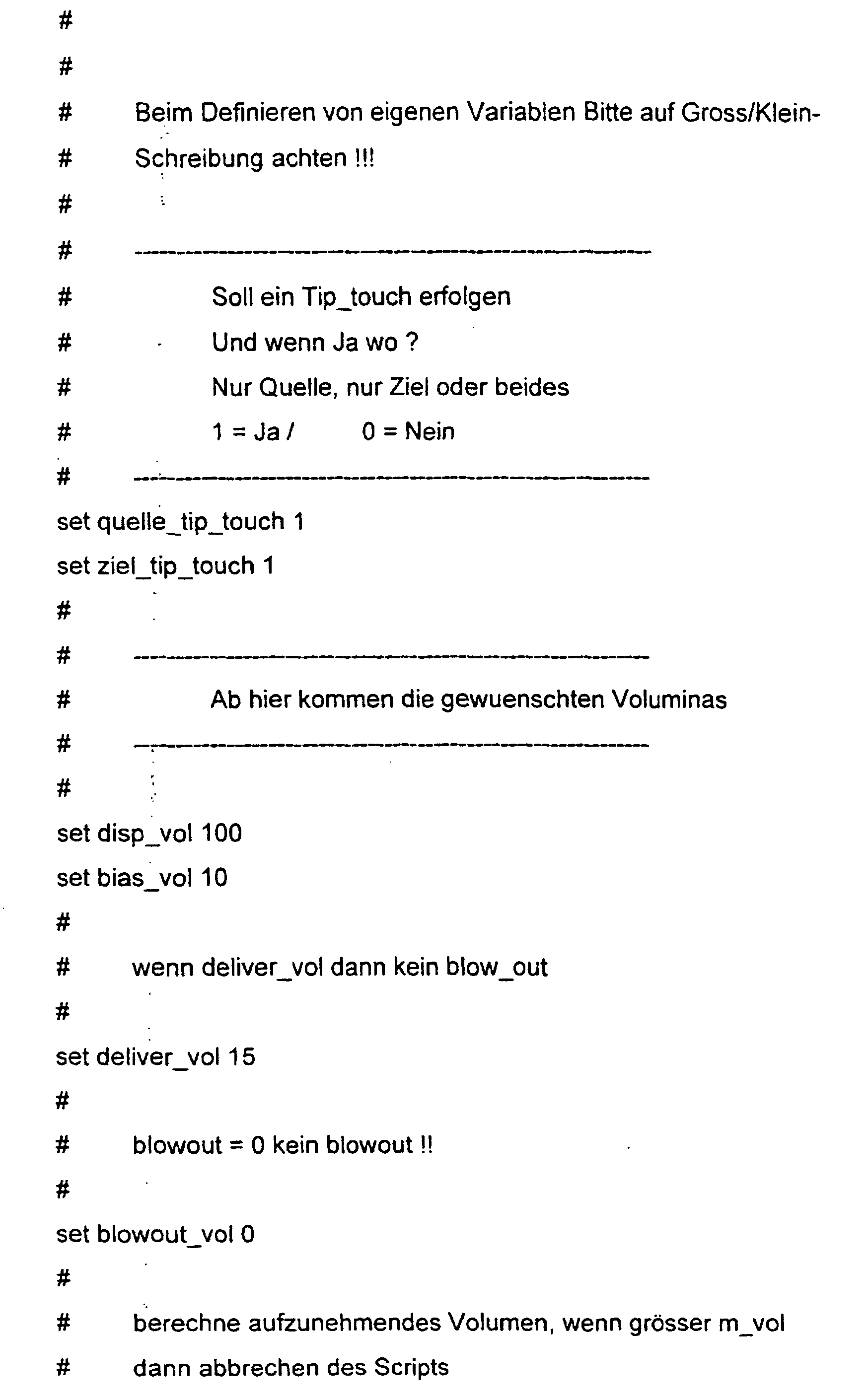

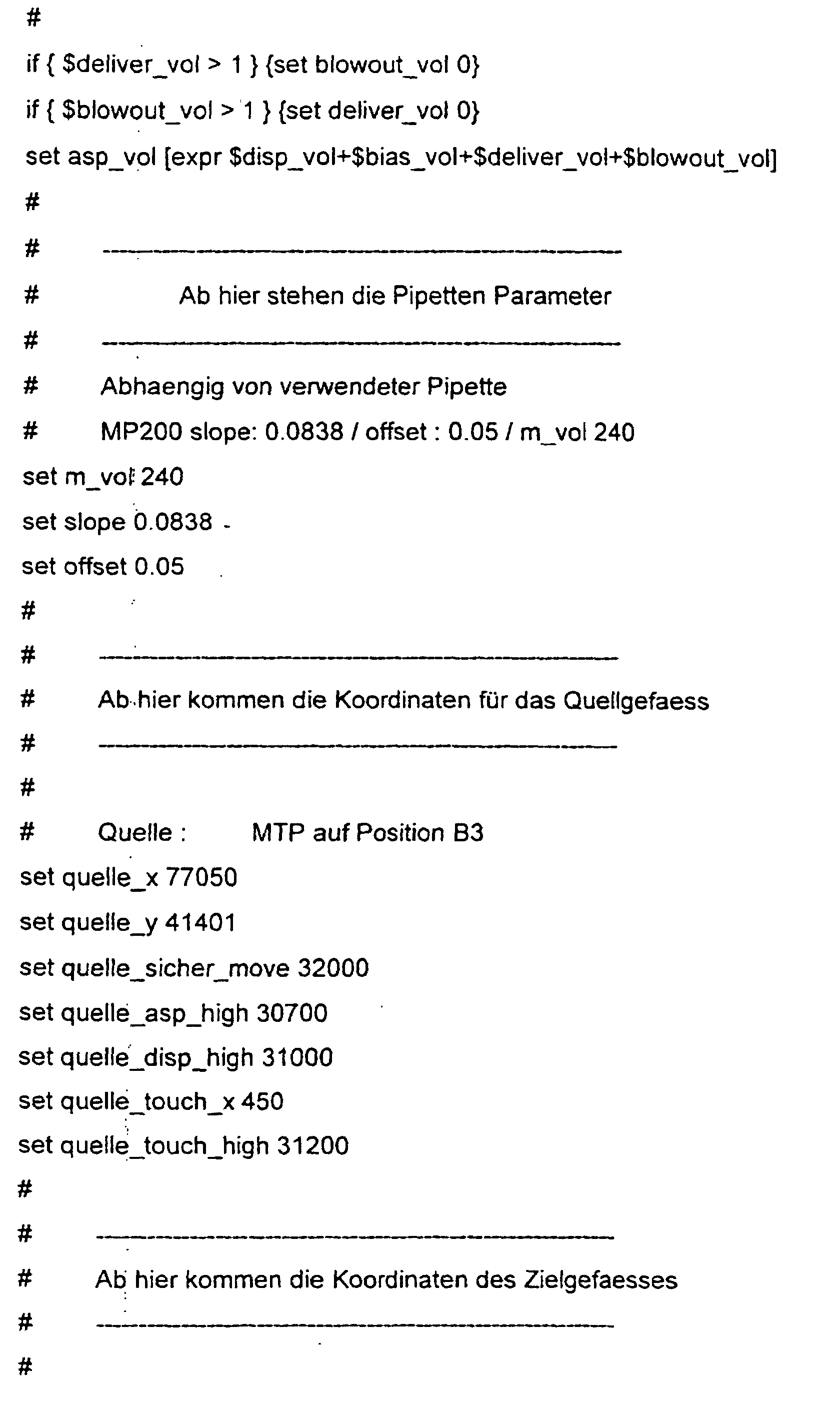

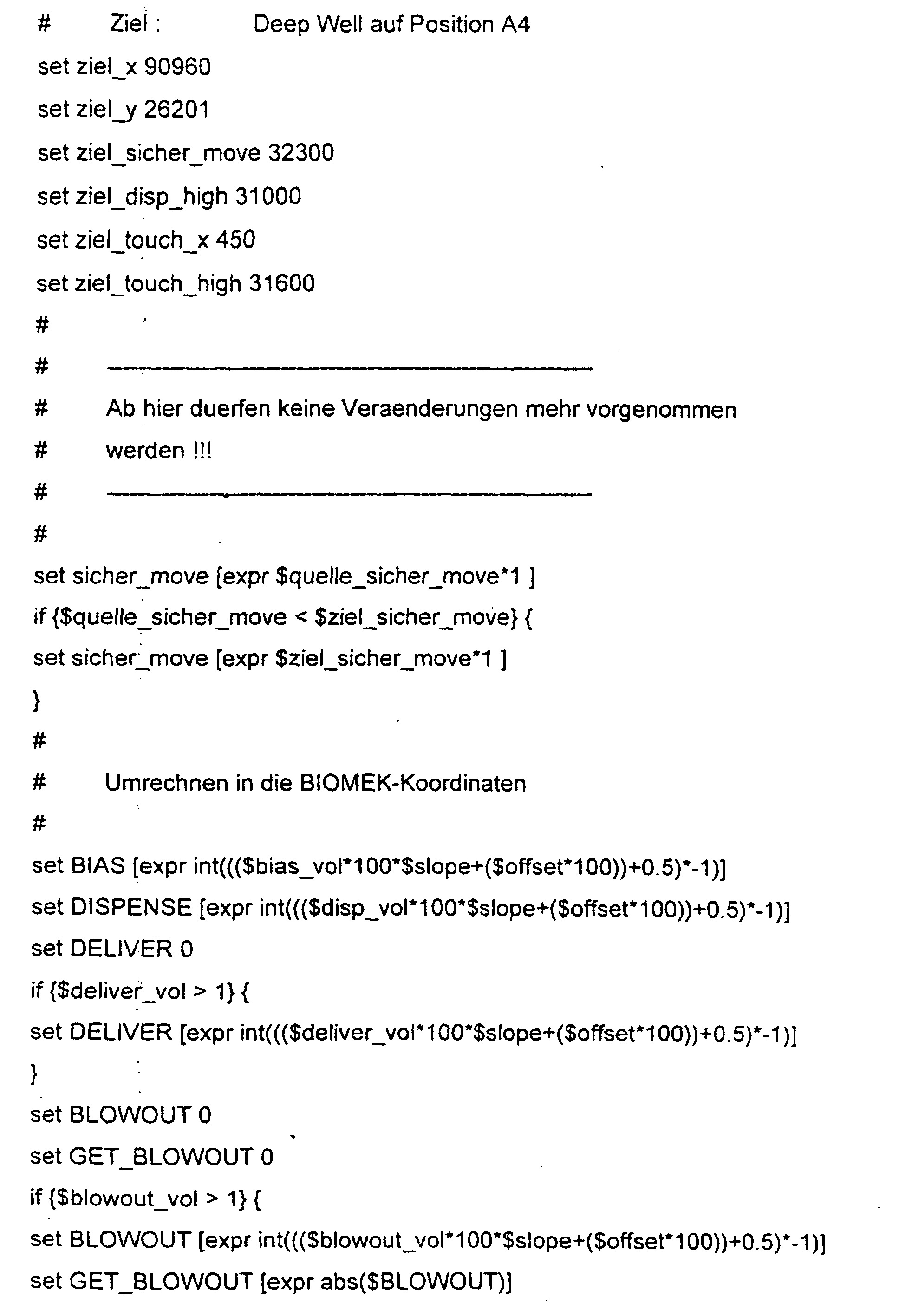

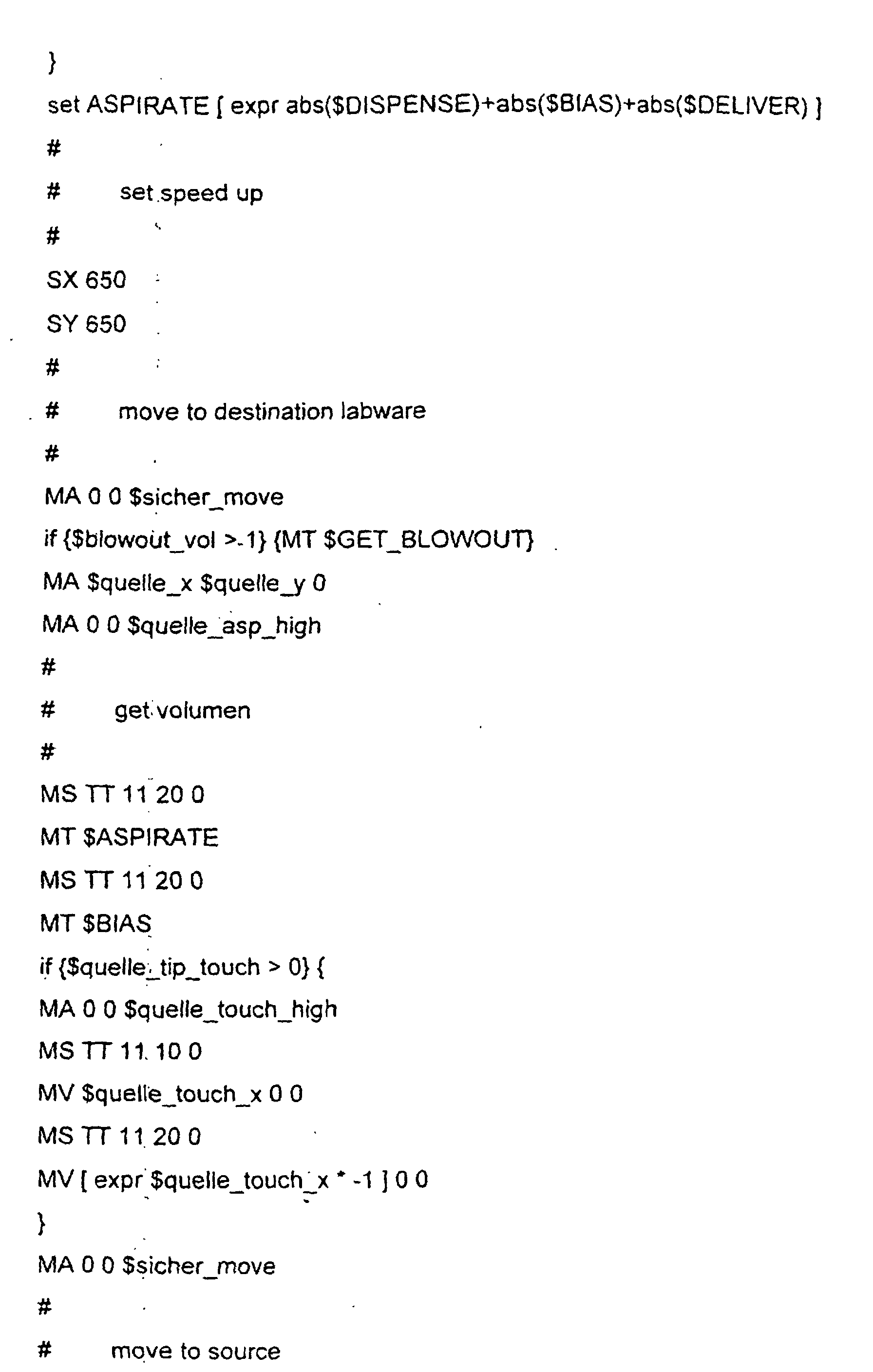

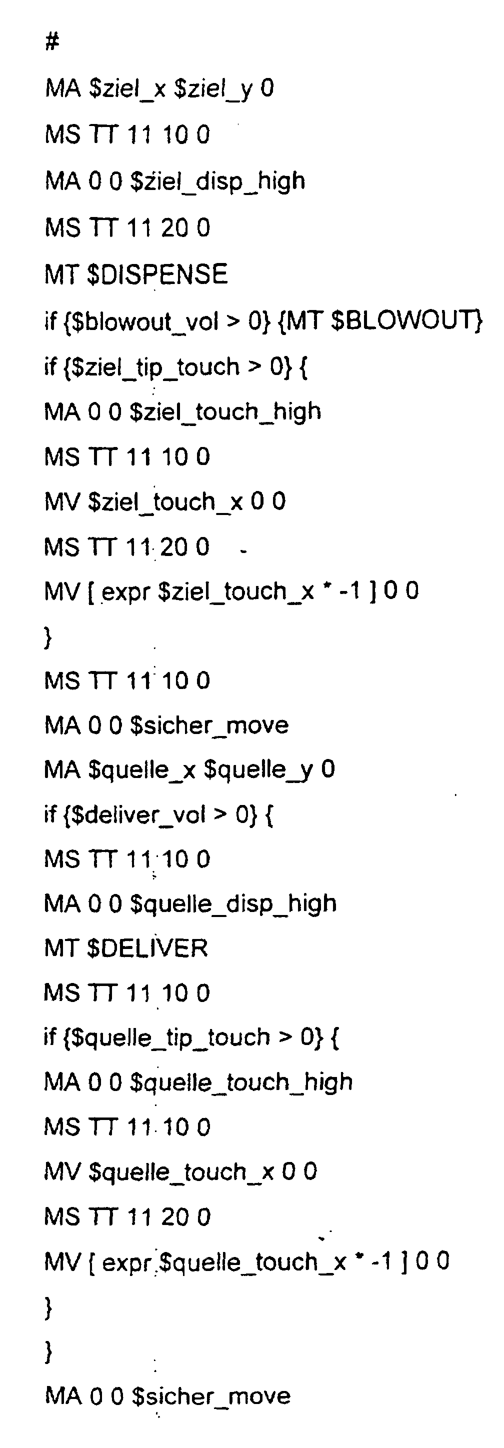

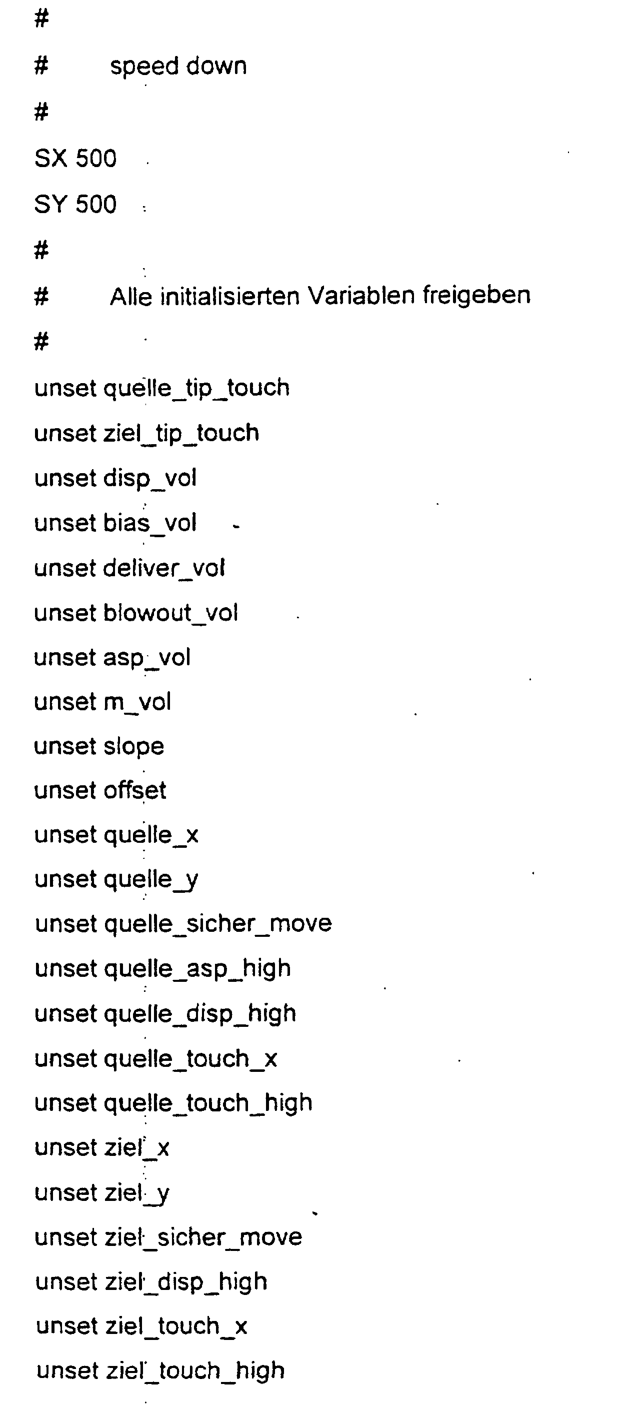

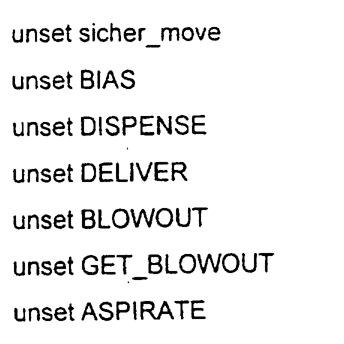

## Patentansprüche

1. Plattenförmige Temperiervorrichtung (1) für Pipettierroboter zur Aufnahme von Mikrotiterplatten die eine Rohrschlange (5) für ein Temperiermedium aufweist und in mindestens zwei Segmente (8) zur Aufnahme der Mikrotiterplatten unterteilt ist **dadurch gekennzeichnet, daß** sie ein Oberteil (2) und ein Unterteil (3) aufweist, die beide als rechteckige Platten ausgebildet sind, die aufeinandergelegt die Temperiervorrichtung (1) bilden, und in das Oberteil (2) in die Seite, die dem Unterteil (3) gegenüberliegt, Nuten (4) so eingearbeitet sind, dass diese Seite in mindestens zwei Segmente (8) zur Aufnahme von Mikrotiterplatten unterteilt ist.

2. Temperiervorrichtung nach Anspruch 1, **dadurch gekennzeichnet, daß** in das Oberteil (2) in die Seite, die dem Unterteil (3) gegenüberliegt, Nuten (4) so eingearbeitet sind, daß diese Seite in drei Segmente (8) zur Aufnahme von Mikrotiterplatten unterteilt ist.

3. Temperiervorrichtung nach Ansprüchen 1 bis 2, wobei die Oberfläche (4) des Unterteils (3), die mit dem Oberteil (2) in Kontakt ist, eine Rinne (5) aufweist, die im zusammengebauten Zustand wie eine Rohrschlange wirkt.

4. Pipettierroboter, aufweisend eine Temperiervorrichtung nach den Ansprüchen 1 bis 3.

5. Programmierbarer Pipettierroboter, aufweisend eine Temperiervorrichtung zur Aufnahme von Mikrotiterplatten nach den Ansprüchen 1 bis 3, die Behältnisse für Flüssigkeiten aufweisen, sowie eine über eine Programmiersprache ansteuerbare Pipettiervorrichtung, wobei der Pipettierroboter so programmiert ist, daß, wenn die Temperiervorrichtung und die Mikrotiterplatten bestimmungsgemäß angeordnet sind, mit der Pipettiervorrichtung in jedes der Behältnisse eine Flüssigkeit gefüllt werden kann.

## Claims

1. A temperature-control apparatus (1) in the form of a plate for pipetting robots for holding microtitration plates, which has a spiral tube (5) for a temperature-control medium and is divided into at least two segments (8) for holding microtitration plates, wherein said apparatus has an upper part (2) and a lower part (3) which are both designed as rectangular plates and, resting one on top of the other, form the temperature-control apparatus (1), and grooves (4) are incorporated in the upper part (2)., in the side which is opposite the lower part (3), such that this side is divided into at least two segments (8) for holding microtitration plates.

2. The temperature-control apparatus as claimed in claim 1 wherein grooves (4) are incorporated in the upper part (2), in the side which is opposite the lower part (3), such that this side is divided into three segments (8) for holding microtitration plates.

3. The temperature-control apparatus as claimed in claim 1 or 2, that surface (4) of the lower part (3) which is in contact with the upper part (2) having a channel (5) which, in the assembled state, acts like a spiral tube.

4. A pipetting robot, having a temperature-control apparatus as claimed in claims 1 to 3.

5. A programmable pipetting robot, having a temperature-control apparatus for holding microtitration plates as claimed in claims 1 to 3, which microtitration plates have containers for liquids, as well as a pipetting apparatus which can be actuated via a programming language, the pipetting robot being programmed such that, when the temperature-control apparatus and the microtitration plates are arranged correctly, the pipetting apparatus can be used to fill each of the containers with a liquid.

## Revendications

1. Dispositif de régulation de température (1) en forme de plaquette pour un robot de pipettage destiné à recevoir des plaquettes de microtitrage, qui comprend un serpentin tubulaire (5) pour un fluide de températion, et qui est subdivisé en au moins deux segments (8) pour la réception des plaquettes de microtitrage, **caractérisé en ce qu'**il comprend une partie supérieure (2) et une partie inférieure (3), lesquelles sont toutes de réalisées sous forme de plaques rectangulaires qui forment en étant posées l'une sur l'autre le dispositif de régulation de température (1), et **en ce que** dans la partie supérieure (2) dans le côté opposé à la partie inférieure (3), sont ménagées des gorges (4) de telle manière que ce côté est subdivisé en au moins deux segments (8) pour la réception de plaquettes de microtitrage.

2. Dispositif de régulation de température selon la revendication 1, **caractérisé en ce que**, dans la partie supérieure (2) dans le côté opposé à la partie inférieure (3), sont ménagées des gorges (4) de telle manière que ce côté est subdivisé en trois segments (8) pour la réception de plaquettes de microtitrage.

3. Dispositif de régulation de température selon l'une ou l'autre des revendications 1 et 2, dans lequel la surface (4) de la partie inférieure (3) qui est en contact avec la partie supérieure (2) comporte une goulotte (5) qui fait office de serpentin tubulaire dans l'état assemblé.

4. Robot de pipettage, comprenant un dispositif de régulation de température selon les revendications 1 à 3.

5. Robot de pipettage programmable, comprenant un dispositif de régulation de température pour recevoir des plaquettes de microtitrage selon les revendications 1 à 3, qui comprennent des récipients pour des liquides, ainsi qu'un dispositif de pipettage susceptible d'être commandé au moyen d'un langage de programmation, ledit robot de pipettage étant ainsi programmé que, quand le dispositif de régulation de température et les plaquettes de microtitrage sont agencés de manière conforme à leur destination, un liquide peut être rempli dans chacun des récipients au moyen du dispositif de pipettage.
